(19) Europäisches Patentamt / European Patent Office / Office européen des brevets

(11) **EP 3 118 274 A1**

(12) **EUROPÄISCHE PATENTANMELDUNG**

(43) Veröffentlichungstag:
**18.01.2017 Patentblatt 2017/03**

(51) Int Cl.:
*C09J 7/02* (2006.01)   *C09J 11/02* (2006.01)
*C09J 11/06* (2006.01)

(21) Anmeldenummer: **16179112.4**

(22) Anmeldetag: **12.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **16.07.2015   CN 201510654203**

(71) Anmelder: **tesa SE**
**22848 Norderstedt (DE)**

(72) Erfinder:
• SEITZ, Karsten
  21614 Buxtehude (DE)
• KLUGE-PALETTA, Werner
  21244 Buchholz (DE)
• CHEN, Weibin
  Suzhou Industrail Park, 21500 (CN)
• WANG, Lily
  Suzhou Industry Park
  Jiangsu Province, 215000 (CN)
• LU, Qin
  Suzhou Industry Park
  Jiangsu, 215000 (CN)

(54) **FLAMMGESCHÜTZTES SCHAUMKLEBEBAND**

(57)    Es soll ein geschäumtes Haftklebeband mit hervorragenden Flammschutzwerten sowie sehr guten klebtechnischen Eigenschaften zur Verfügung gestellt werden. Dies gelingt, indem ein Klebeband, das eine geschäumte Schicht und eine äußere Haftklebmasseschicht umfasst, so ausgestattet wird, dass die äußere Haftklebmasseschicht mindestens 10 Gew.-% Flammschutzmittel enthält und die geschäumte Schicht kein oder weniger als 10 Gew.-% Flammschutzmittel enthält, jeweils bezogen auf das Gesamtgewicht der betreffenden Schicht.

EP 3 118 274 A1

## Beschreibung

Die vorliegende Erfindung liegt auf dem technischen Gebiet der Haftklebebänder, insbesondere der flammgeschützten Haftklebebänder und betrifft konkret ein flammgeschütztes Schaumklebeband.

Es gibt eine Vielzahl von Anwendungen und Konstruktionen, in denen für verwendete Materialien vom Gesetzgeber hohe Anforderungen an die Schwerentflammbarkeit gestellt werden. Klebstoffe und Klebebänder, die schwer entflammbar sind, werden daher vor allem in Konstruktionen eingesetzt, die derartigen erhöhten Sicherheitsanforderungen unterliegen. Diese finden sich u.a. im Transportsektor, beispielsweise in Flugzeugen, Zügen, Bussen und auch Aufzügen. Auch in - insbesondere öffentlich zugänglichen - Gebäuden ist es häufig erforderlich, dort verwendete Klebebänder so auszustatten, dass sie schwer oder gar nicht entflammbar sind. Ein weiteres Beispiel ist die Computertechnologie, in der infolge einer fortschreitenden Miniaturisierung von Bauteilen immer mehr Haftklebebänder eingesetzt werden, andererseits aber auch die Anforderungen an diese immer höher werden. In den Schaltkreisen können schon im Betrieb sehr hohe Temperaturen auftreten. Werden auf den Schaltkreisen auch Lötverbindungen hergestellt, treten dabei Temperaturen von 280 °C und mehr auf, bei denen sich vorhandene Klebebänder nicht entzünden dürfen.

Die Begriffe "Flammschutz" und "Schwerentflammbarkeit" umfassen daneben häufig auch indirekte Aspekte wie eine verringerte Rauch- und Hitzeentwicklung sowie eine Verhinderung oder zumindest Minderung der Bildung schädlicher Gase.

Geschäumte Haftklebebänderfinden vielfältige Verwendung in temporären oder permanenten Verklebungen. Meistens werden sie als Montageklebebänder eingesetzt, um zwei Substrate bzw. Bauteile miteinander zu verbinden. Dies setzt eine beidseitige Beschichtung des Klebebandes mit Haftklebstoff voraus. Daneben gibt es auch einseitig klebende geschäumte Haftklebebänder.

Generell werden geschäumte Haftklebebänder - ob nun ein- oder doppelseitig klebend - wegen der über einen weiten Bereich einstellbaren mechanischen Eigenschaften zunehmend bevorzugt. Die Einstellbarkeit des Eigenschaftsprofils ist im Wesentlichen auf die Ausgestaltung des Schaums zurückzuführen. Besonders vorteilhafte Eigenschaften lassen sich mit geschäumten Klebebändern insbesondere in Bezug auf das Dämpfungsverhalten erzielen.

Flammgeschützte Kleb- und Dichtmassen auf Basis von adhäsiven oder thermoplastischen Polymeren und Phosphinsäuresalzen sind beispielsweise in EP 1 975 217 A2 beschrieben.

DE 10 2012 210 386 A1 beschreibt ein Klebeband zum Schutz von Glaskanten, das eine Hartphase und eine einen Polymerschaum enthaltende Weichphase umfasst, wobei Hart- und Weichphase in einem bestimmten Dickenverhältnis zueinander stehen.

Ein Gegenstand von WO 2009/052335 A1 sind Klebebänder, die einen Träger und eine Klebstoffzusammensetzung umfassen, wobei der Träger und/oder die Klebstoffzusammensetzung eine halogenfreie Flammschutzzusammensetzung enthalten können. Letztere wiederum umfasst Phosphinat oder Phosphinat-Salz und optional weitere nicht halogenierte Flammschutzmittel wie Aluminiumtrihydrat oder Magnesiumhydroxid.

US 2007/0059521 A1 beschreibt ein flammgeschütztes Acrylat-Haftklebeband, das eine Flammschutzmittel enthaltende Haftklebstoff-Schicht aus einem Acrylatpolymer und eine zweite Haftklebstoffschicht aus einem Acrylatpolymer enthält. Die zweite Haftklebstoffschicht befindet sich zumindest teilweise auf beiden Seiten der ersten, das Flammschutzmittel enthaltenden Haftklebstoffschicht, und es handelt sich bei dieser ersten Haftklebstoffschicht um einen Schaum.

Es besteht ein anhaltender Bedarf an flammgeschützten geschäumten Haftklebebändern mit einem möglichst breit einstellbaren Eigenschaftsprofil. Aufgabe der vorliegenden Erfindung war es, derartige Klebebänder mit hervorragenden Flammschutzwerten sowie sehr guten klebtechnischen Eigenschaften zur Verfügung zu stellen.

Der Erfindung liegt der Gedanke zugrunde, eine spezielle Platzierung des Flammschutzmittels im Aufbau des Klebebandes vorzunehmen.

Ein erster Gegenstand der Erfindung ist ein Klebeband, das eine geschäumte Schicht und eine äußere Haftklebmasseschicht umfasst und das dadurch gekennzeichnet ist, dass die äußere Haftklebmasseschicht mindestens 10 Gew.-% Flammschutzmittel enthält und die geschäumte Schicht kein oder weniger als 10 Gew.-% Flammschutzmittel enthält, jeweils bezogen auf das Gesamtgewicht der betreffenden Schicht. Mit einem derartigen Aufbau des Klebebandes wird der Schaum, der für den überwiegenden Teil des Eigenschaftsprofils bestimmend ist, weitestgehend frei von Beeinträchtigungen durch das Flammschutzmittel gehalten. Daher lassen sich eine Reihe von Parametern über einen breiten Bereich einstellen und insgesamt ein hohes klebtechnisches und mechanisches Eigenschaftsniveau erzielen. All dies geht nicht zu Lasten der Flammschutz-Performance, vielmehr wird auch diese Anforderung in hervorragender Weise erfüllt.

Unter einem "Klebeband" wird allgemein ein im Wesentlichen in zwei Raumrichtungen ausgedehntes und daher als Flächengebilde zu bezeichnendes System verstanden, das zumindest auf einer seiner beiden nach außen weisenden Hauptflächen eine Haftklebmasse oder eine (re)aktivierbare Klebmasse aufweist und somit zumindest nach Aktivierung Klebwirkung entfalten kann. Unter den Begriff "Klebeband" fallen auch Systeme, die bereits verklebt sind, auf deren Grundzustand die vorstehende Definition jedoch zutrifft. Nicht unter den Begriff "Klebeband" fallen Flüssigklebstoffe, auch nicht im ausgehärteten und/oder verklebten Zustand.

Das erfindungsgemäße Klebeband umfasst eine geschäumte Schicht. Der Ausdruck "geschäumt" bedeutet, dass die Schicht Gebilde aus gasgefüllten, kugel- oder polyederförmigen Zellen umfasst, welche durch flüssige, halbflüssige, höherviskose oder feste Zellstege begrenzt werden und welche in einem solchen Anteil in der betreffenden Schicht vorliegen, dass die Dichte der geschäumten Schicht gegenüber der Dichte des Matrixmaterials, also der Gesamtheit der nicht gasförmigen Materialien, aus denen die betreffende Schicht aufgebaut ist, verringert ist. Die Dichte der geschäumten Schicht beträgt erfindungsgemäß bevorzugt 30 bis 700 kg/m$^3$, besonders bevorzugt 50 bis 500 kg/m$^3$, insbesondere 50 bis 200 kg/m$^3$.

Die Dicke der geschäumten Schicht beträgt bevorzugt 300 $\mu$m bis 6.000 $\mu$m, stärker bevorzugt 800 $\mu$m bis 5.000 $\mu$m, insbesondere 1.000 $\mu$m bis 4.500 $\mu$m.

Die geschäumte Schicht ist bevorzugt eine Schicht eines Polymerschaums. Darunter wird ein Schaum verstanden, dessen Matrixmaterial im Wesentlichen von einem oder mehreren Polymeren gebildet wird. Bevorzugt enthält das Matrixmaterial der geschäumten Schicht zu mindestens 30 Gew.-%, stärker bevorzugt zu mindestens 50 Gew.-% und besonders bevorzugt zu mindestens 70 Gew.-%, insbesondere zu mindestens 90 Gew.-%, jeweils bezogen auf das Gesamtgewicht der geschäumten Schicht, ein oder mehrere Polymere. Die Polymere des Polymerschaums sind bevorzugt ausgewählt aus der Gruppe bestehend aus Polyolefinen; Polyurethanen; Polyvinylchlorid (PVC); Terpolymerisaten aus Ethylen, Propylen und einem nicht konjugierten Dien (EPDM); Copolymeren aus Ethylen und einem mit einer polaren Gruppe substituierten Ethylen; Polyacrylaten sowie Gemischen aus zwei oder mehreren der vorstehend genannten Polymere. Das Matrixmaterial der geschäumten Schicht enthält somit bevorzugt zu mindestens 30 Gew.-%, stärker bevorzugt zu mindestens 50 Gew.-% und besonders bevorzugt zu mindestens 70 Gew.-%, insbesondere zu mindestens 90 Gew.-%, jeweils bezogen auf das Gesamtgewicht der geschäumten Schicht, ein oder mehrere Polymere ausgewählt aus der Gruppe bestehend aus Polyolefinen; Polyurethanen; Polyvinylchlorid (PVC); Terpolymerisaten aus Ethylen, Propylen und einem nicht konjugierten Dien (EPDM); Copolymeren aus Ethylen und einem mit einer polaren Gruppe substituierten Ethylen; Polyacrylaten sowie Gemischen aus zwei oder mehreren der vorstehend genannten Polymere. Besonders bevorzugt enthält die geschäumte Schicht keine weiteren Polymere außer einem oder mehreren Polymeren ausgewählt aus der Gruppe bestehend aus Polyolefinen; Polyurethanen; Polyvinylchlorid (PVC); Terpolymerisaten aus Ethylen, Propylen und einem nicht konjugierten Dien (EPDM); Copolymeren aus Ethylen und einem mit einer polaren Gruppe substituierten Ethylen; Polyacrylaten sowie Gemischen aus zwei oder mehreren der vorstehend genannten Polymere.

Besonders bevorzugt enthält der Polymerschaum beziehungsweise die geschäumte Schicht mindestens ein Polymer ausgewählt aus Polyolefinen und Copolymeren aus Ethylen und einem mit einer polaren Gruppe substituierten Ethylen. Insbesondere beträgt der Anteil der Gesamtheit aller Polymere ausgewählt aus Polyolefinen und Copolymeren aus Ethylen und einem mit einer polaren Gruppe substituierten Ethylen an der geschäumten Schicht mindestens 30 Gew.-%, stärker bevorzugt mindestens 50 Gew.-% und besonders bevorzugt mindestens 70 Gew.-%, insbesondere mindestens 80 Gew.-%, beispielsweise mindestens 90 Gew.-%, jeweils bezogen auf das Gesamtgewicht der geschäumten Schicht. Ganz besonders bevorzugt enthält die geschäumte Schicht keine weiteren Polymere außer einem oder mehreren Polymeren ausgewählt aus Polyolefinen und Copolymeren aus Ethylen und einem mit einer polaren Gruppe substituierten Ethylen.

Unter einem "Polyolefin" wird erfindungsgemäß ein Polymer der allgemeinen Struktur -[CH$_2$-CR$^1$R$^2$-]$_n$- verstanden, worin R$^1$ und R$^2$ unabhängig voneinander ein Wasserstoffatom oder eine lineare oder verzweigte gesättigte aliphatische oder cycloaliphatische Gruppe bezeichnen. Das Polyolefin ist bevorzugt Polyethylen, Polypropylen, ein Ethylen-Propylen-Copolymer oder ein Gemisch aus Polyethylen und Polypropylen. Das Polyethylen kann dabei einen oder mehrere der an sich bekannten Polyethylen-Typen wie HDPE, LDPE, LLDPE, VLDPE, VLLDPE, Blends aus diesen Polyethylen-Typen und Gemische davon umfassen. Das Polypropylen ist bevorzugt ein kristallines Polypropylen, stärker bevorzugt ein Homopolypropylen (hPP). In einer speziellen Ausführungsform der Erfindung enthält die geschäumte Schicht keine weiteren Polymere außer einem oder mehreren Polyolefinen.

Unter einem Copolymer aus Ethylen und einem mit einer polaren Gruppe substituierten Ethylen wird ein Polymer der allgemeinen Struktur -[CH$_2$-CR$^3$R$^4$-]$_n$- verstanden, worin R$^3$ oder R$^4$ ein Wasserstoffatom bezeichnen und der jeweils verbleibende Substituent eine mindestens ein Sauerstoffatom enthaltende Gruppe bezeichnet. Bevorzugt ist das Copolymer aus Ethylen und einem mit einer polaren Gruppe substituierten Ethylen ein Ethylen-Vinylacetat-Copolymer (EVA), ein Ethylen-Methylacrylat-Copolymer (EMA), ein Ethylen-Ethylacrylat-Copolymer (EEA), ein Ethylen-Acrylsäure-Copolymer (EAA), ein Ethylen-Butylacrylat-Copolymer (EBA) oder ein Gemisch aus diesen. Besonders bevorzugt ist das Copolymer aus Ethylen und einem mit einer polaren Gruppe substituierten Ethylen ein Ethylen-Vinylacetat-Copolymer (EVA). Das EVA hat bevorzugt einen Vinylacetat-Gehalt von 3 bis 70 Gew.-%, stärker bevorzugt von 5 bis 30 Gew.-%, insbesondere von 10 bis 20 Gew.-%. In einer speziellen Ausführungsform der Erfindung enthält die geschäumte Schicht keine weiteren Polymere außer einem oder mehreren Copolymeren aus Ethylen und einem mit einer polaren Gruppe substituierten Ethylen, insbesondere keine weiteren Polymere außer einem Ethylen-Vinylacetat-Copolymer (EVA).

Die Schäumung des Matrixmaterials kann prinzipiell auf jede gebräuchliche Art und Weise bewirkt worden sein, beispielsweise durch ein zugesetztes Treibgas oder durch ein chemisches Schäumungsmittel, das sich bei einer bestimmten Temperatur während der Verarbeitung unter Gasbildung zersetzt.

PE-Schäume werden häufig hergestellt, indem in einem ersten Schritt das üblicherweise pulverförmige Schäumungsmittel und das Polymer gemischt werden. Diese Mischung stellt den so genannten Masterbatch dar. Im nächsten Schritt werden dann die weiteren Komponenten des Schaums eingemischt, beispielsweise Restpolymere, Alterungsschutzmittel, gegebenenfalls Flammschutzmittel etc. Zu diesem Zweck können Extruder, z.B. Doppelschneckenextruder, oder Kneter eingesetzt werden.

In einem weiteren Verfahrensschritt wird die Mischung dann zu einer Schaummatrix extrudiert, beispielsweise in einem Einschneckenextruder, und durch eine Düse als Schicht ausgebracht. Es resultiert ein so genannter Folienballen. Anschließend wird die Zusammensetzung vernetzt, z.B. durch Elektronenstrahlhärtung mittels eines Elektronenstrahlbeschleunigers.

In einem finalen Schritt erfolgt dann die Schäumung, häufig als thermische Schäumung, d.h. durch thermische Aktivierung des Schäumungsmittels initiiert, ausgeführt.

Erfindungsgemäß enthält die geschäumte Schicht kein Flammschutzmittel oder, sofern sie Flammschutzmittel enthält, weniger als 10 Gew.-% Flammschutzmittel. Es hat sich herausgestellt, dass bei derartigen Gehalten an Flammschutzmittel die Eigenschaften der geschäumten Schicht gar nicht beziehungsweise kaum beeinträchtigt werden. Die Eigenschaften der geschäumten Schicht, welche auch als die Trägerschicht des Klebebandes angesehen werden kann, haben einen wesentlichen Einfluss auf die Leistungsstärke des Klebebandes. Erfindungsgemäß werden daher die Anteile an Flammschutzmittel in der geschäumten Schicht desto mehr bevorzugt, je niedriger sie sind. Bevorzugt enthält die geschäumte Schicht kein oder weniger als 8 Gew.-%, besonders bevorzugt kein oder weniger als 6 Gew.-%, insbesondere kein oder weniger als 3 Gew.-%, beispielsweise kein oder weniger als 1 Gew.-% Flammschutzmittel.

Ganz besonders bevorzugt ist die geschäumte Schicht frei von Flammschutzmitteln. "Frei von" bedeutet in diesem Zusammenhang nicht zwingend "frei von" im harten mathematischen Sinne, sondern ist als "frei von bewusst zugesetzten Flammschutzmitteln" zu verstehen. Gehalte an Flammschutzmittel im Bereich der Allgegenwartskonzentration oder von technisch unvermeidbar aus der Herstellung der geschäumten Schicht resultierenden Mengen werden in Bezug auf das Merkmal "frei von Flammschutzmittel" erfindungsgemäß als unbeachtlich angesehen.

Das erfindungsgemäße Klebeband umfasst eine äußere Haftklebmasseschicht. Der Begriff "äußere Haftklebmasseschicht" wird in dem Sinne verstanden, dass die betreffende Haftklebmasseschicht eine nach außen, also auf ein nicht zum Klebeband gehörendes Substrat gerichtete Klebwirkung entfalten kann. Dies setzt voraus, dass sie auf ihrer Außenseite nicht mit einer weiteren Schicht bedeckt ist. Ein Releaseliner, wie er gewöhnlich zum Schutz der Klebflächen eines Klebebandes verwendet wird, wird erfindungsgemäß allerdings nicht als Bestandteil des Klebebandes angesehen. Dies bedeutet, dass die "äußere Haftklebmasseschicht" auch dann als solche zu bezeichnen ist, wenn sie mit einem Releaseliner abgedeckt ist.

Unter einem Haftklebstoff beziehungsweise einer Haftklebmasse wird in dieser Schrift wie im allgemeinen Sprachgebrauch üblich ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann. Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: $G' = (\tau/\gamma) \cdot \cos(\delta)$ (τ = Schubspannung, γ = Deformation, δ = Phasenwinkel = Phasenverschiebung zwischen Schubspannungs- und Deformationsvektor). Die Definition des Verlustmoduls G" lautet: $G" = (\tau/\gamma) \cdot \sin(\delta)$ (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne dieser Schrift als haftklebrig definiert, wenn bei Raumtemperatur, hier definitionsgemäß bei 23°C, im Deformationsfrequenzbereich von $10^0$ bis $10^1$ rad/sec, G' zumindest zum Teil im Bereich von $10^3$ bis $10^7$ Pa liegt und wenn G" ebenfalls zumindest zum Teil in diesem Bereich liegt. Zum Teil heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve entsprechend innerhalb dieses Fensters liegt.

Das erfindungsgemäße Klebeband umfasst eine äußere Haftklebmasseschicht, enthält also mindestens eine äußere Haftklebemasseschicht. Erfindungsgemäß ist es möglich, dass das Klebeband auch auf seiner zweiten Seite eine äußere Haftklebmasseschicht enthält und demzufolge ein doppelseitiges Klebeband ist. In diesem Fall sind bevorzugt beide äußeren Haftklebmasseschichten erfindungsgemäß, enthalten also insbesondere mindestens 10 Gew.-% Flammschutzmittel. Die zweite äußere Haftklebmasseschicht kann dabei identisch mit der ersten sein, sie kann sich aber auch von dieser unterscheiden. Es ist erfindungsgemäß auch möglich, dass das Klebeband zwar zwei äußere Haftklebmasseschichten aufweist, aber nur eine der beiden Schichten eine erfindungsgemäße äußere Haftklebmasseschicht ist, also insbesondere mindestens 10 Gew.-% Flammschutzmittel enthält.

Die äußere Haftklebmasseschicht enthält bevorzugt mindestens ein Polymer ausgewählt aus der Gruppe bestehend aus Poly(meth)acrylaten, Naturkautschuk, Synthesekautschuken, Silikonen, Polyurethanen und Mischungen aus zwei oder mehreren der vorstehend aufgeführten Polymere. Besonders bevorzugt enthält die äußere Haftklebmasseschicht mindestens ein Poly(meth)acrylat. Insbesondere enthält die äußere Haftklebmasseschicht keine weiteren Polymere außer einem oder mehreren Poly(meth)acrylaten.

Unter "Poly(meth)acrylaten" werden - dem allgemeinen Verständnis entsprechend - Polymere verstanden, die durch radikalische Polymerisation von Acryl- und/oder Methylacrylmonomeren sowie gegebenenfalls weiteren copolymerisierbaren Monomeren zugänglich sind. Der Begriff "Poly(meth)acrylat" umfasst erfindungsgemäß sowohl Polymere auf Basis von Acrylsäure und deren Derivaten als auch solche auf Basis von Acrylsäure und Methacrylsäure und deren Derivaten als auch solche auf Basis von Methacrylsäure und deren Derivaten, wobei die Polymere immer Acrylsäureester, Methacrylsäureester oder Mischungen aus Acryl- und Methacrylsäureestern enthalten. Die Poly(meth)acrylate der äußeren Haftklebmasseschicht weisen bevorzugt eine mittlere molare Masse $M_w$ von maximal 2.000.000 g/mol auf.

Bevorzugt werden die Monomere der Poly(meth)acrylate der äußeren Haftklebmasseschicht und ihre mengenmäßige Zusammensetzung derart gewählt, dass sich nach der so genannten ***Fox***-Gleichung (G1)

$$\frac{1}{T_G} = \sum_n \frac{w_n}{T_{G,n}} \qquad (G1)$$

(vgl. T.G. Fox, Bull. Am. Phys. Soc. 1 (1956) 123) ein $T_G$-Wert für das Polymer von ≤ 25 °C ergibt. Ein solcher Wert ist besonders vorteilhaft für Haftklebemassen, die im Wesentlichen bei Raumtemperatur eingesetzt werden.

In der Gleichung G1 repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in Kelvin.

Bevorzugt enthält die äußere Haftklebmasseschicht ein oder mehrere Poly(meth)acrylat(e), die auf die folgende Monomerzusammensetzung zurückgeführt werden können:

a) Acrylsäureester und/oder Methacrylsäureester der Formel (F1)

$$CH_2 = C(R^I)(COOR^{II}) \qquad (F1),$$

worin $R^I$ = H oder $CH_3$ und R" ein Alkylrest mit 1 bis 30 C-Atomen, stärker bevorzugt mit 4 bis 14 C-Atomen, besonders bevorzugt mit 4 bis 9 C-Atomen, ist;

b) olefinisch ungesättigte Monomere mit funktionellen Gruppen, die eine Reaktivität mit Vernetzersubstanzen aufweisen;

c) optional weitere olefinisch ungesättigte Monomere, die mit den Monomeren (a) und (b) copolymerisierbar sind.

Beispiele für Monomere a) sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigte Isomere, wie z.B. Isobutylacrylat, 2-Ethylhexylacrylat, 2-Ethylhexylmethacrylat, Isooctylacrylat, Isooctylmethacrylat. Besonders bevorzugt steht R" für eine Methyl-, eine n-Butyl- und eine 2-Ethylhexylgruppe, insbesondere für eine n-Butyl- und eine 2-Ethylhexylgruppe beziehungsweise sind die Monomere a) ausgewählt aus n-Butylacrylat und 2-Ethylhexylacrylat.

Die Monomere b) sind bevorzugt olefinisch ungesättigte Monomere mit funktionellen Gruppen, die eine Reaktion mit Epoxidgruppen eingehen können. Besonders bevorzugt enthalten die Monomere b) jeweils mindestens eine funktionelle Gruppe ausgewählt aus der Gruppe bestehend aus Hydroxy-, Carboxy-, Sulfonsäure- und Phosphonsäuregruppen, Säureanhydridfunktionen, Epoxidgruppen und substituierten oder unsubstituierten Aminogruppen. Insbesondere sind die Monomere b) ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, 2-Hydroxyethylacrylat, 3-Hydroxypropylacrylat, 2-Hydroxyethylmethacrylat, 3-Hydroxypropylmethacrylat, 6-Hydroxyhexylmethacrylat, Allylalkohol, Glycidylacrylat und Glycidylmethacrylat. Ganz besonders bevorzugt sind die Monomere b) Acrylsäure und/oder Methacrylsäure, insbesondere Acrylsäure.

Als Monomere c) kommen prinzipiell alle vinylisch funktionalisierten Verbindungen in Frage, die mit den Monomeren a) und den Monomeren b) copolymerisierbar sind. Mit Auswahl und Menge der Monomere c) lassen sich vorteilhaft Eigenschaften der erfindungsgemäßen Haftklebemasse regulieren.

Die Monomere c) sind besonders bevorzugt ausgewählt aus der Gruppe bestehend aus Methylacrylat, Ethylacrylat, n-Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, 2-Butoxyethylmethacrylat, 2-Butoxyethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofurfurylacrylat, Diethylaminoethylacrylat, Diethylaminoethylmethacrylat, Dimethylaminoethylacrylat, Dimethylaminoethylmethacrylat, , 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy-Polyethylenglykolmethacrylat 350, Methoxy-Polyethylenglykolmethacrylat 500, Propylenglycolmonomethacrylat, Butoxydiethylenglykolmethacrylat, Ethoxytriethylenglykolmethacrylat, Octafluoropentyl-acrylat, Octafluoropentylmethacrylat, 2,2,2-Trifluoroethylmethacrylat, 1,1,1,3,3,3-Hexa-fluoroisopropylacrylat, 1,1,1,3,3,3-Hexafluoroisopropylmethacrylat, 2,2,3,3,3-Pentafluoro-propylmethacrylat, 2,2,3,4,4,4-Hexafluorobutylmethacrylat, 2,2,3,3,4,4,4-Heptafluoro-butylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, N,N-Dialkyl-substituierten Amiden, insbesondere N,N-Dimethylacrylamid, N,N-Dimethylmethacrylamid, N-Benzylacrylamid, N-Isopropylacrylamid, N-tert-Butylacrylamid, N-tert-Octylacrylamid, N-Methylolacrylamid, N-Methylolmethacrylamid; weiter Acrylnitril, Methacrylnitril; Vinylethern wie Vinylmethylether, Ethylvinylether, Vinylisobutylether; Vinylestern wie Vinylacetat; Vinylchlorid, Vinylhalogeniden, Vinylidenhalogeniden, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol, 2-Polystyrolethylmethacrylat (Molekulargewicht Mw von 4000 bis 13000 g/mol) und Poly(Methylmethacrylat)ethylmethacrylat (Mw von 2000 bis 8000 g/mol). Insbesondere ist das Monomer c) Methylacrylat.

Die Monomere c) können vorteilhaft auch derart gewählt werden, dass sie funktionelle Gruppen enthalten, die eine strahlenchemische Vernetzung (beispielsweise durch

Elektronenstrahlen oder UV) unterstützen. Geeignete copolymerisierbare Photoinitiatoren sind z.B. Benzoinacrylat und acrylatfunktionalisierte Benzophenonderivate. Monomere, die eine Vernetzung durch Elektronenbestrahlung unterstützen, sind z.B. Tetrahydrofurfurylacrylat, N-tert-Butylacrylamid und Allylacrylat.

Besonders bevorzugt sind, sofern die äußere Haftklebmasseschicht mehrere Poly(meth)acrylate enthält, alle Poly(meth)acrylate der äußeren Haftklebmasseschicht auf die vorstehend beschriebene Monomerzusammensetzung zurückzuführen. Insbesondere sind alle Poly(meth)acrylate der äußeren Haftklebmasseschicht auf eine Monomerzusammensetzung bestehend aus Acrylsäure, n-Butylacrylat, 2-Ethylhexylacrylat und Methylacrylat zurückzuführen.

Ganz besonders bevorzugt ist das Poly(meth)acrylat beziehungsweise sind alle Poy(meth)acrylate der äußeren Haftklebmasseschicht auf die folgende Monomerzusammensetzung zurückzuführen:

| | |
|---|---|
| Acrylsäure | 1 - 10 Gew.-% |
| Methylacrylat | 1 - 15 Gew.-% |
| 2-Ethylhexylacrylat | 30 - 60 Gew.-%, |
| n-Butylacrylat | 25 - 50 Gew.-%, |

wobei sich die Anteile der Monomeren zu 100 Gew.-% addieren.

Die Poly(meth)acrylate können durch radikalische Polymerisation der Monomere in Lösungsmitteln, insbesondere in Lösungsmitteln mit einem Siedebereich von 50 bis 150 °C, vorzugsweise von 60 bis 120 °C, unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt werden.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-*t*-butylperoxid, Cyclohexylsulfonylacetylperoxid, Diisopropylpercarbonat, *t*-Butylperoktoat, Benzpinacol. In einer sehr bevorzugten Vorgehensweise wird als radikalischer Initiator 2,2'-Azobis(2-methylbutyronitril) oder 2,2'-Azobis(2-methylpropionitril) (2,2'-Azobisisobutyronitril; AIBN) verwendet.

Als Lösungsmittel für die Herstellung der Poly(meth)acrylate kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 0,5 bis 15 Gew.-%, bevorzugt 3 bis 10 Gew.-%, bezogen auf das eingesetzte Lösungsmittelgemisch, enthalten, vorgezogen werden.

Bevorzugt beträgt der Anteil der Gesamtheit an Polymeren ausgewählt aus der Gruppe bestehend aus Poly(meth)acrylaten, Naturkautschuk, Synthesekautschuken, Silikonen, Polyurethanen und Mischungen aus zwei oder mehreren der vorstehend aufgeführten Polymere an der äußeren Haftklebmasseschicht 35 bis 90 Gew.-%, stärker bevorzugt 40 bis 75 Gew.-%, insbesondere 45 bis 68 Gew.-%, ganz besonders bevorzugt 50 bis 62 Gew.-%, beispielsweise 52 bis 60 Gew.-%, jeweils bezogen auf das Gesamtgewicht der äußeren Haftklebmasseschicht. Besonders bevorzugt beträgt der Anteil der Gesamtheit an Poly(meth)acrylaten an der äußeren Haftklebmasseschicht 35 bis 90 Gew.-%, stärker bevorzugt 40 bis 75 Gew.-%, insbesondere 45 bis 68 Gew.-%, ganz besonders bevorzugt 50 bis 62 Gew.-%, beispielsweise 52 bis 60 Gew.-%, jeweils bezogen auf das Gesamtgewicht der äußeren Haftklebmasseschicht.

Erfindungsgemäß enthält die äußere Haftklebmasseschicht mindestens 10 Gew.-% Flammschutzmittel. Bevorzugt enthält die äußere Haftklebmasseschicht 10 bis 35 Gew.-% Flammschutzmittel, stärker bevorzugt 12 bis 30 Gew.-% Flammschutzmittel, insbesondere 14 bis 28 Gew.-% Flammschutzmittel, beispielsweise 17 bis 26 Gew.-% Flammschutzmittel, jeweils bezogen auf das Gesamtgewicht der äußeren Haftklebmasseschicht. Es ist erfindungsgemäß also vorgesehen, dass die Flammschutzeigenschaften des Klebebandes wesentlich, bevorzugt vollständig durch das in der äußeren Haftklebmasseschicht beziehungsweise in den äußeren Haftklebmasseschichten enthaltene Flammschutzmittel bestimmt werden. Es wurde festgestellt, dass es zur Erzielung hinreichender Flammschutzeigenschaften ausreichend ist, die äußere(n) Haftklebmasseschicht(en) mit Flammschutzmittel zu versehen. Vorteilhaft ist es dadurch möglich, die geschäumte Schicht weitgehend beziehungsweise vollständig frei von einer Beeinflussung durch zugesetztes Flammschutzmittel zu halten. Viele, insbesondere mechanische, Eigenschaften des Klebebandes kommen auf diese Weise voll zur Geltung und werden in ihrer Ausprägung nicht durch flammschutzbedingte Zusätze abgemildert.

Bevorzugt enthält die geschäumte Schicht weniger als 8 Gew.-%, besonders bevorzugt weniger als 6 Gew.-%, insbesondere weniger als 3 Gew.-%, beispielsweise weniger als 1 Gew.-%, ganz besonders bevorzugt kein Flammschutzmittel, und die äußere Haftklebmasseschicht enthält 10 bis 35 Gew.-% Flammschutzmittel, stärker bevorzugt 12 bis 30 Gew.-% Flammschutzmittel, insbesondere 14 bis 28 Gew.-% Flammschutzmittel, beispielsweise 17 bis 26 Gew.-% Flammschutzmittel, jeweils bezogen auf das Gesamtgewicht der betreffenden Schicht.

Im erfindungsgemäßen Klebeband einsetzbare Flammschutzmittel umfassen beispielsweise Aluminiumoxidhydrate, Zinkborate, Ammoniumphosphate beziehungsweise Ammoniumpolyphosphate, Antimonoxid, Chlorparaffine, polychlorierte Biphenyle, Hexabrombenzol, polybromierte Diphenylether; Cyanurate wie Melamincyanurat; organische Phosphorsäurederivate, beispielsweise 2-Carboxyethyl-phenylphosphorsäure; organische Phosphate und Polyphosphate, Phosphite und Phosphonate, beispielsweise Tritolylphosphat, tert-Butylphenyldiphenylphosphat, Bisphenol A-bis(diphenylphosphat), Resorcinolbis(diphenylphosphat) und Melaminpolyphosphat, Diethylbis(2-hydroxyethyl)aminomethylphosphonat und Diphenylanilinophosphonat, ; Phosphinsäuresalze, Diphosphinsäuresalze und Dialkylphosphinsäuresalze; sowie halogenierte organische Phosphorverbindungen wie Tris(2,3-dibrompropyl)phosphat, Tris(2-brom-4-methylphenyl)phosphat und Tris(2-chlorisopropyl)phosphat. Halogenfreie Flammschutzmittel werden erfindungsgemäß bevorzugt. Die erfindungsgemäß einsetzbaren Flammschutzmittel sind daher bevorzugt ausgewählt aus der Gruppe bestehend aus Aluminiumoxidhydraten, Zinkboraten, Ammoniumphosphaten und Ammoniumpolyphosphaten, Antimonoxid; Cyanuraten; organischen Phosphorsäurederivaten; organischen Phosphaten, Phosphiten und Phosphonaten; Phosphinsäuresalzen, Diphosphinsäuresalzen und Dialkylphosphinsäuresalzen sowie Gemischen aus zwei oder mehreren der vorstehend aufgeführten Flammschutzmittel. Besonders bevorzugt sind die erfindungsgemäß einsetzbaren Flammschutzmittel ausgewählt aus der Gruppe bestehend aus Ammoniumpolyphosphaten und Dialkylphosphinsäuresalzen.

Erfindungsgemäß bevorzugte Dialkylphosphinsäuresalze sind solche der Formel F2

$$(R^{III}R^{IV}()P-O^{(-)})_m M^{(m+)} \qquad (F2),$$

worin $R^{III}$ und $R^{IV}$ gleich oder verschieden sind und für einen linearen oder verzweigten $C_1$- bis $C_6$-Alkylrest stehen; M für Mg, Ca, Al, Sb, Sn, Ge, Ti, Fe, Zr, Zn, Ce, Bi, Sr, Mn, Li, Na, K oder eine protonierte Stickstoffbase steht; und m für eine natürliche Zahl von 1 bis 4 steht.

M steht bevorzugt für Al, Ca, Ti, Zn, Sn oder Zr.
$R^{III}$ und $R^{IV}$ sind bevorzugt gleich oder verschieden und stehen für einen Methyl-, Ethyl-, n-Propyl-, iso-Propyl-, n-Butyl-, iso-Butyl-, tert-Butyl-, n-Pentyl-, iso-Pentyl-, n-Hexyl- oder iso-Hexylrest.

Besonders bevorzugte Dialkylphosphinsäuresalze sind Aluminiumtrisdiethylphosphinat, Aluminiumtrismethylethylphosphinat, Aluminiumtrisethylbutylphosphinat, Titanylbisdiethylphosphinat, Titantetrakisdiethylphosphinat, Titanylbismethylethylphosphinat, Titantetrakismethylethylphosphinat, Titanylbisethylbutylphosphinat, Titantetrakisethylbutylphosphinat, Zinkbisdiethylphosphinat, Zinkbismethylethylphosphinat und Zinkbisethylbutylphosphinat sowie Mischungen aus einem oder mehreren dieser Dialkylphosphinsäuresalze.

Bevorzugt enthält die äußere Haftklebmasseschicht mindestens ein Flammschutzmittel ausgewählt aus der Gruppe bestehend aus Ammoniumpolyphosphaten und Dialkylphosphinsäuresalzen. Besonders bevorzugt enthält die äußere Haftklebmasseschicht keine weiteren Flammschutzmittel außer einem oder mehreren Flammschutzmitteln ausgewählt aus der Gruppe bestehend aus Ammoniumpolyphosphaten und Dialkylphosphinsäuresalzen.

Insbesondere umfasst das Flammschutzmittel Aluminiumtrisdiethylphosphinat. In einer speziellen Ausführungsform enthält die äußere Haftklebmasseschicht keine weiteren Flammschutzmittel außer Aluminiumtrisdiethylphosphinat. In einer weiteren Ausführungsform enthält das erfindungsgemäße Klebeband keine weiteren Flammschutzmittel außer Aluminiumtrisdiethylphosphinat.

Das Flammschutzmittel kann neben den schon erwähnten Substanzen erfindungsgemäß einen oder mehrere so genannte(n) Synergisten umfassen. Synergisten können zu 0,1 bis 70 Gew.-%, bezogen auf das Gesamtgewicht des Flammschutzmittels, im Flammschutzmittel enthalten sein. Besonders bevorzugt enthält das Flammschutzmittel

a) 60 bis 99 Gew.-% einer oder mehrerer Verbindungen ausgewählt aus Dialkylphosphinsäuresalzen der Formel F2 und Ammoniumpolyphosphaten und
b) 1 bis 40 Gew.-% eines oder mehrerer Synergisten,

wobei die Anteile auf das Gesamtgewicht des Flammschutzmittels bezogen sind und sich zu 100 Gew.-% addieren.

Die Synergisten sind bevorzugt Stickstoff-, Phosphor- oder Phosphorstickstoffverbindungen. Besonders bevorzugt ist der Synergist beziehungsweise sind die Synergisten ausgewählt aus der Gruppe bestehend aus Allantoin, Cyanursäure, Glycoluril, Harnstoff, Melamin, Melam, Melem, Melon, Melaminphosphat, Melaminpyrophosphat, Melaminpolyphosphat, Melampolyphosphat, Melempolyphosphat, Melonpolyphosphat, Melamincyanurat, Piperazinphosphat, Piperazinpyrophosphat, Carbodiimid, sterisch gehinderten Phenolen, Phosphinoxid, Hypophosphit, cyclischen Phosphonaten, Triaryl(alkyl)phosphiten, alkyl- und arylsubstituierten Phosphaten, Aluminium-, Zinn-, Bor-, Magnesium-, Calcium-, Cerverbindungen, Zinkoxid, Zinkcarbonat, Zinkstannat, Zinkborat, Zinkhydrogenphosphat, Zinkpyrophosphat, Zinkoleat, Zinkstearat und/oder Zinkphosphat.

Sofern das Flammschutzmittel einen oder mehrere Synergisten enthält, werden diese erfindungsgemäß als Bestandteil des Flammschutzmittels angesehen. Sie sind also - wenn vorhanden - insbesondere auch in die in vorangegangenen Abschnitten erwähnten Anteile des Flammschutzmittels an der äußeren Haftklebmasseschicht beziehungsweise an der geschäumten Schicht inkludiert.

Das Flammschutzmittel kann mit üblichen Mischgeräten, beispielsweise mit Rührwerken, in die Zusammensetzungen der äußeren Haftklebmasseschicht und gegebenenfalls der geschäumten Schicht eingearbeitet werden. Die Einarbeitung erfolgt bevorzugt vor dem Ausbringen der betreffenden Schicht.

Die äußere Haftklebmasseschicht kann neben einem oder mehreren Polymeren und einem oder mehreren Flammschutzmitteln weitere Bestandteile enthalten, beispielsweise Alterungsschutzmittel, Weichmacher, Vernetzer und/oder Promotoren. Diese Stoffe werden im Folgenden zusammenfassend auch als "Hilfsstoffe" bezeichnet.

In einer Ausführungsform der Erfindung enthält die äußere Haftklebmasseschicht mindestens ein klebrig machendes Harz, welches ausgewählt aus der Gruppe bestehend aus Pinen-, Inden- und Kolophoniumharzen sowie deren disproportionierten, hydrierten, polymerisierten, veresterten Derivaten und Salzen; aliphatischen und aromatischen Kohlenwasserstoffharzen, Terpenharzen, Terpenphenolharzen sowie Gemischen aus zwei oder mehreren der vorstehend aufgeführten klebrig machenden Harze ist. Von den Kohlenwasserstoffharzen lassen sich alle mit dem entsprechenden Poly(meth)acrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze, insbesondere auf $C_5$- bis $C_9$-Kohlenwasserstoffharze. Besonders bevorzugt enthält die äußere Haftklebmasseschicht mindestens ein klebrig machendes Harz ausgewählt aus Terpenphenolharzen und $C_5$-$C_9$-Kohlenwasserstoffharzen. Insbesondere enthält die äußere Haftklebmasseschicht ein Terpenphenolharz.

Bevorzugt enthält die äußere Haftklebmasseschicht 5 bis 45 Gew.-%, stärker bevorzugt 10 bis 38 Gew.-%, insbesondere 13 bis 35 Gew.-%, ganz besonders bevorzugt 15 bis 30 Gew.-% klebrig machende(s) Harz(e).

In einer Ausführungsform der Erfindung enthält die äußere Haftklebmasseschicht

| | |
|---|---|
| 40 bis 75 Gew.-% | Poly(meth)acrylat, |
| 10 bis 38 Gew.-% | klebrig machendes Harz, |
| 10 bis 35 Gew.-% | Flammschutzmittel, und |
| 0 bis 5 Gew.-% | Hilfsstoffe, |

wobei sich die Gewichtsanteile zu 100 Gew.-% addieren.

Insbesondere enthält die äußere Haftklebmasseschicht

| | | |
|---|---|---|
| 45 bis 68 Gew.-% | Polymethacrylat mit der folgenden Monomerzusammensetzung: | |
| | Acrylsäure | 1 - 10 Gew.-% |
| | Methylacrylat | 1 - 15 Gew.-% |
| | 2-Ethylhexylacrylat | 30 - 60 Gew.-%, |
| | n-Butylacrylat | 25 - 50 Gew.-%, |
| | wobei sich die Anteile der Monomeren zu 100 Gew.-% addieren; | |
| 13 bis 35 Gew.-% | Terpenphenolharz; | |
| 12 bis 30 Gew.-% | Flammschutzmittel; und | |
| 0 bis 5 Gew.-% | Hilfsstoffe. | |

Die Einarbeitung von Flammschutzmitteln, Harzen und weiteren Zuschlagstoffen in die Haftklebmasse kann erfolgen, indem diese Substanzen in die Polymerdispersion eingemischt werden. Das Polymer beziehungsweise die Polymere können in diesem Fall vorteilhaft nach dem Ausbringen der Masse thermisch vernetzt werden, beispielsweise mit Aluminiumchelaten wie Aluminiumacetylacetonat. Das Abziehen des Lösemittels und die Vernetzung lassen sich auf diese Weise in einem Schritt erledigen. Geeignete Vernetzergehalte liegen in etwa bei 0,2 bis 0,4 Gew.-%, bezogen auf die Masse des Polymers.

Es ist aber auch möglich, Flammschutzmittel, Harze und Hilfsstoffe in das bereits vom Lösemittel befreite Polymer einzuarbeiten. Zu diesem Zweck können Kneter, Extruder und ähnliche Geräte eingesetzt werden. Die Vernetzung des Polymers kann dann thermisch, aber auch als Elektronenstrahlvernetzung erfolgen. Denkbar sind auch Vernetzungsprozesse, bei denen beide Varianten zum Einsatz kommen.

Grundsätzlich stellt sich die Einarbeitung von Flammschutzmitteln in eine Haftklebmasse schwieriger dar als die Einarbeitung in den Schaum, da der Schaum in der Regel ohnehin mechanisch verarbeitet wird. In den niederviskosen Klebmassen waren Phänomene wie Agglomeratbildung, Beeinträchtigung der Vernetzungsreaktion und/oder des Strichbildes, Ausbildung von Oberflächenstrukturen, Erniedrigung der Haftung der Haftklebmasse auf dem Schaumträger oder Rückgang der Feuchtebeständigkeit zu befürchten. Aus diesen und anderen Gründen wurde bisher die Einarbeitung der Flammschutzmittel in die geschäumten Träger bevorzugt. Im Rahmen der vorliegenden Erfindung hat sich jedoch herausgestellt, dass sich die Flammschutzmittel verhältnismäßig problemlos auch in die Haftklebmassen einarbeiten lassen und die klebtechnische Leistungsfähigkeit der Klebebänder dadurch allenfalls unwesentlich beeinträchtigt wird.

Bevorzugt beträgt das Verhältnis der Flächengewichte von äußerer Haftklebmasseschicht beziehungsweise der Flächengewichtssumme beider äußeren Haftklebmasseschichten zu geschäumter Schicht ≥ 3:10, stärker bevorzugt ≥ 1:2. Mit derartigen Verhältnissen werden besonders gute Flammschutzeigenschaften erzielt. Aus dem vorstehenden ergibt sich, dass, sofern das Klebeband auf jeder Seite eine erfindungsgemäße äußere Haftklebmasseschicht aufweist, unter dem Flächengewicht die Summe der Flächengewichte beider äußeren Haftklebmasseschichten verstanden wird. Das Flächengewicht der geschäumten Schicht kann grundsätzlich mittels jeder beliebigen Kombination von Schichtdicke und Schaumdichte eingestellt werden.

Das erfindungsgemäße Klebeband kann weitere Schichten umfassen, wie sie im Aufbau von Klebebändern üblich sind, beispielsweise Primerschichten, Barriereschichten, Getterschichten, verstärkende Schichten etc.

Der Schichtaufbau des erfindungsgemäßen Klebebandes kann grundsätzlich durch alle in Frage kommenden Technologien hergestellt werden, beispielsweise durch Beschichten, Laminieren oder Kaschieren. Die Haftung zwischen den einzelnen Schichten kann verbessert werden, indem einzelne oder beide Oberflächen der geschäumten Schicht und/oder die zur geschäumten Schicht weisende Oberfläche der äußeren Haftklebmasseschicht einer Corona- oder Plasmabehandlung oder einer Beflammung unterzogen wird. Ebenso kann zwischen geschäumter Schicht und äußerer Haftklebmasseschicht, gegebenenfalls auch zwischen diesen und weiteren Schichten, ein Primer aufgetragen werden.

Die äußere Haftklebmasseschicht kann mit einem Releaseliner abgedeckt sein, der sie vor der Anhaftung von Staub und weiteren Verunreinigungen aus der Umgebung schützen soll. Es kommen sämtliche an sich bekannten Linersysteme in Frage. Liner dienen der Abdeckung einer Haftklebmasseschicht bis zu deren Verklebung im Anwendungsfall; ein Liner ist also ein Hilfsmittel, das nach seiner Entfernung von der Haftklebemasseschicht entsorgt werden muss. Das gleiche gilt für eine Trennfolie, welche insofern einen Spezialfall eines Liners darstellt, als die Releasebeschichtung auf einer Folie aufgetragen ist. Ein Liner wird allgemein und auch im Rahmen der vorliegenden Erfindung nicht als Bestandteil des Klebebandes angesehen, sondern vielmehr lediglich als ein Hilfsmittel.

In der Regel handelt es sich bei Linern um Trennpapiere (Papiere mit ein- oder beidseitiger Silikonbeschichtung) oder um Trennfolien (häufig Polyester-, Polypropylen- oder Polyethylenfolien mit Silikonbeschichtung). Erfindungsgemäß kommen aber auch andere Trennsysteme beziehungsweise Trennbeschichtungen in Betracht.

Erfindungsgemäße Klebebänder können beispielsweise bei der Innenausstattung von Gebäuden und Transportmitteln verwendet werden, insbesondere natürlich für Aufbauten, an die erhöhte Brandschutzanforderungen gestellt werden. Sie können zum Beispiel zum Fixieren von Schildern und ähnlichen Elementen an insbesondere metallischen Bauteilen in Bussen, von metallischen Bauelementen zur Verstärkung ("reinforcement bars") von Paneelen in Fahrstühlen oder von Verstärkungselementen in Schiffen eingesetzt werden. Weitere Anwendungsfelder sind beispielsweise Verklebungen von Spiegeln, von Prallschutzstreifen an Krankenhausbetten oder auch von Schallschutzdämmmatten an der Innenwand von Flugzeugen, wobei letztere häufig über zusätzlich verwendete Klettbänder fixiert werden. Ein weiterer Gegenstand der Erfindung ist somit die Verwendung eines erfindungsgemäßen Klebebandes zum Fixieren, insbesondere zum permanenten Verkleben, von Bauteilen in der Innenausstattung von Gebäuden und/oder Fahrzeugen.

Beispiele

Es wurden diverse ein- oder doppelseitige Schaumklebebänder hergestellt. Folgende Schaumformulierungen wurden verwendet:

| | |
|---|---|
| PE- und EVA-Schäume: | Alveolit-Serie, Firma Sekusui Alveo AG |
| PU-Schaum: | PU-Blockschaum, Firma Mayser |
| PP/PE-Schaum: | hergestellt gemäß EP 1 752 485 A1. |

Die Haftklebmasse wurde wie folgt hergestellt:

Ein für radikalische Polymerisationen konventioneller 2 L-Glasreaktor wurde mit 12 g Acrylsäure, 20 g Methylacrylat, 174 g n-Butylacrylat, 194 g 2-Ethylhexylacrylat und 300 g Aceton/Isopropanol (99:1) befüllt. Nach 45 Minuten Durchleiten von Stickstoffgas unter Rühren wurde der Reaktor auf 58 °C hochgeheizt und 0,2 g 2,2'-Azobisisobutyronitril (AIBN, Vazo 64®, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,2 g Vazo 64 hinzugegeben. Nach 3 und 6 h wurde jeweils mit 150 g eines Aceton/Isopropanol-Gemischs (99/1) verdünnt. Zur Reduktion der Restinitiatoren wurden nach 8 und nach 10 h jeweils 0,4 g Di-(4-tert-Butylcyclohexyl)peroxydicarbonat (Perkadox 16®, Fa. Akzo Nobel) hinzugegeben. Die Reaktion wurde nach 22 h Reaktionszeit abgebrochen und auf Raumtemperatur abgekühlt.

Die Bestimmung des Molekulargewichtes nach Test A ergab ein Mw = 1.100.000 g/mol bei einer Polydispersität $M_W/M_n$ = 7,3.

Die Klebemasse wurde dann unter Wärme und im Vakuum vom Lösungsmittel befreit und in einem Kneter mit 30 Gew.-% (bezugen auf das Polymer) Terpenphenolharz und der jeweils vorgesehenen Menge an Aluminiumdiethylphosphinat abgemischt.

Die so erhaltene Masse wurde als Hotmelt durch eine Düse auf ein silikonisiertes Trennpapier (Fa. Laufenberg) beschichtet (Masseauftrag 50 g/m$^2$). Anschließend wurde auf den jeweiligen geschäumten Träger (siehe Tabelle 1) kaschiert. Die Haftklebemassen wurde mit 60 kGy und 200 kV ES vernetzt.

Auf diese Weise wurden verschiedene Klebebänder mit den in Tabelle 1 enthaltenen Parametern hergestellt und einem Brenngeschwindigkeitstest nach DIN 75200 unterzogen. Dabei wird das eine Streifenbreite von 19 mm aufweisende, waagerecht angeordnete, in einem U-förmigen Halterahmen eingespannte Klebeband der Einwirkung einer definierten Flamme mit mäßiger Flammbeanspruchung über 15 s am offenen Ende des Klebebandes ausgesetzt. Es wird festgestellt, ob und wann die Flamme erlischt oder in welcher Zeit die Flammenfront eine zwischen zwei Messmarken liegende Brennstrecke durchläuft. Der Test gilt als bestanden, sofern nicht eine maximale Brennrate von 102 mm/min überschritten wird. Bestenfalls verlischt die Flamme vor Erreichen der ersten Messmarke (= selbstverlöschend). Die Ergebnisse sind in Tabelle 1 enthalten. Schlechtestes und bestes Resultat wurden jeweils als Mittelwert aus drei Versuchen ermittelt.

Tabelle 1: Klebebandaufbauten und Ergebnisse

| Nr. | Träger (Dichte, Dicke, Gehalt FSM) | Haftklebmasse | Flächengewichts-Verhältnis Haftklebemasse / Träger | Test nach DIN 75200 bestanden ja/nein | Schlechtestes/bestes Resultat (mm/min) |
|---|---|---|---|---|---|
| 1 (VB) | PE-Schaum (67 kg/m$^3$, 1,5 mm) mit 5 Gew.-% FSM | doppelseitig, ohne FSM | 1 : 1 | nein | 191,3/173,9 |
| 2 | PE-Schaum (67 kg/m$^3$, 1,5 mm) ohne FSM | doppelseitig, mit 20 Gew.-% FSM | 1 : 1 | ja | sv / sv |
| 3 | PE-Schaum (50 kg/m$^3$, 3 mm) ohne FSM | doppelseitig, mit 20 Gew.-% FSM | 2:3 | ja | 42,5 / sv |
| 4 | PE-Schaum (40 kg/m$^3$, 3 mm) ohne FSM | doppelseitig, mit 20 Gew.-% FSM | 5:6 | ja | sv / sv |
| 5 | PE-Schaum (30 kg/m$^3$, 3 mm) ohne FSM | doppelseitig, mit 20 Gew.-% FSM | 10:9 | ja | sv / sv |
| 6 | PE-Schaum (50 kg/m$^3$, 4 mm) ohne FSM | doppelseitig, mit 20 Gew.-% FSM | 1 : 2 | ja | 40,0 / sv |
| 7 (VB) | EVA-Schaum (200 kg/m$^3$, 2 mm) ohne FSM | doppelseitig, mit 20 Gew.-% FSM | 1 : 4 | nein | 156,5 / 130,8 |
| 8 | PE-Schaum (50 kg/m$^3$, 3 mm) ohne FSM | doppelseitig, jeweils 100 g/m$^2$; mit 20 Gew.-% FSM | 4:3 | ja | sv / sv |
| 9 | EVA-Schaum (200 kg/m$^3$, 2 mm) ohne FSM | doppelseitig, jeweils 100 g/m$^2$; mit 20 Gew.-% FSM | 1 : 2 | ja | sv / sv |
| 11 | PU-Schaum (430 kg/m$^3$, 0,8 mm) ohne FSM | doppelseitig, mit 20 Gew.-% FSM | 1 : 3 | ja | sv / sv |

(fortgesetzt)

| Nr. | Träger (Dichte, Dicke, Gehalt FSM) | Haftklebmasse | Flächengewichts-Verhältnis Haftklebemasse / Träger | Test nach DIN 75200 bestanden ja/nein | Schlechtestes/bestes Resultat (mm/min) |
|---|---|---|---|---|---|
| 12 | PP/PE (50/50)-Schaum (67 kg/m$^3$, 1 mm) ohne FSM | doppelseitig, mit 20 Gew.-% FSM | 3:2 | ja | sv / sv |
| VB = Vergleichsbeispiel<br>sv = selbstverlöschend<br>FSM = Flammschutzmittel | | | | | |

Die Klebebänder der Beispiele 2 und 12 wurden darüber hinaus klebtechnischen Untersuchungen unterzogen. Dabei wurden folgende Testmethoden verwendet:

90° Klebkraft Stahl - offene und abgedeckte Seite

Die Bestimmung der Klebkraft Stahl erfolgte bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wurde vor der Messung gereinigt und konditioniert. Dazu wurde die Platte zunächst mit Aceton abgewischt und danach 5 Minuten an der Luft liegen gelassen, damit das Lösungsmittel abdampfen konnte.

Die dem Prüfuntergrund abgewandte Seite des Schichtverbundes wurde dann mit einer 50 $\mu$m-Aluminiumfolie abgedeckt, wodurch verhindert wurde, dass sich das Muster bei der Messung dehnt. Danach erfolgte das Anrollen des Prüfmusters auf den Stahluntergrund. Hierzu wurde das Tape mit einer 2 kg-Rolle 5mal hin und her bei einer Aufrollgeschwindigkeit von 10 m/min überrollt. Unmittelbar nach dem Anrollen wurde die Stahlplatte in eine spezielle Halterung geschoben, die es ermöglicht, das Muster in einem Winkel von 90 °C senkrecht nach oben abzuziehen. Die Klebkraftmessung erfolgte mit einer Zwick-Zugprüfmaschine. Die Messergebnisse sind in N/cm angegeben und sind gemittelt aus drei Messungen.

Scherstandzeit

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche betrug 20 mm x 13 mm (Länge x Breite). Vor der Messung wurde die Stahlplatte gereinigt und konditioniert. Dazu wurde die Platte zunächst mit Aceton abgewischt und danach 5 Minuten an der Luft liegen gelassen, damit das Lösungsmittel abdampfen konnte. Nach dem Verkleben wurde die offene Seite mit einer 50 $\mu$m-Aluminiumfolie verstärkt und mit einer 2 kg-Rolle 2mal hin und her überrollt. Anschließend wurde eine Gurtschlaufe am überstehenden Ende des Schichtverbundes angebracht. Das Ganze wurde dann an einer geeigneten Vorrichtung aufgehängt und mit 10 N belastet. Die Aufhängvorrichtung ist so beschaffen, dass das Gewicht die Probe in einem Winkel von 179°+/-1° belastet. Dadurch wurde sichergestellt, dass sich der Dreischichtverbund nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wurde die offene Seite zunächst mit der 50 $\mu$m-Aluminiumfolie verstärkt, das Trennmaterial entfernt und auf die Prüfplatte analog der Beschreibung geklebt. Die Messung wurde bei Normalklima (23 °C, 55 % Luftfeuchtigkeit) durchgeführt.

Dynamische Scherfestigkeit

Das zu untersuchende Klebeband wurde quadratisch auf eine Kantenlänge von 25 mm zugeschnitten, zwischen zwei Stahlplatten überlappend verklebt und 1 Minute lang mit 0,9 kN angedrückt (Kraft P). Nach einer Lagerung von 24 h bei 23 °C und 50% rel. Feuchte wurde der Verbund in einer Zugprüfmaschine der Firma ZWICK mit 50 mm/min bei 23 °C und 50% rel. Feuchte so getrennt, dass die beiden Stahlplatten unter einem Winkel von 180° auseinander gezogen wurden. Die Maximalkraft wurde in N/cm$^2$ ermittelt.

Die Ergebnisse sind in Tabelle 2 dargestellt.

Tabelle 2 - klebtechnische Prüfungen

| | | Beispiel 2 | | Beispiel 12 | |
|---|---|---|---|---|---|
| | | mit FSM | ohne FSM | mit FSM | ohne FSM |
| Klebkraft Stahl (ASTM) [N/cm] | | | | | |
| Sofort | offene Seite | 19,8 | 19,4 | 15,2 | 19,2 |
| | abgedeckte Seite | 19,3 | 21,1 | 13,0 | 13,9 |
| nach 14d | offene Seite | 23,1 | 23,0 | 19,6 | 20,9 |
| | abgedeckte Seite | 18,0 | 19,8 | 19,0 | 20,0 |
| Schertest [min] | | | | | |
| 10N RT | offene Seite | 597 | 994 | 272 | 497 |
| | abgedeckte Seite | 610 | 1040 | 536 | 594 |
| Dynamischer Schertest [N/cm$^2$] | | | | | |
| Sofort | | 47,6 | 47,3 | 64,7 | 62,3 |

Sämtliche Werte genügen üblichen Anforderungen, die an geschäumte Klebebänder insbesondere bei der Innenausstattung von Gebäuden und Transportmitteln gestellt werden.

**Patentansprüche**

1. Klebeband, umfassend eine geschäumte Schicht und eine äußere Haftklebmasseschicht, **dadurch gekennzeichnet, dass** die äußere Haftklebmasseschicht mindestens 10 Gew.-% Flammschutzmittel enthält und die geschäumte Schicht kein oder weniger als 10 Gew.-% Flammschutzmittel enthält, jeweils bezogen auf das Gesamtgewicht der betreffenden Schicht.

2. Klebeband gemäß Anspruch 1, **dadurch gekennzeichnet, dass** die äußere Haftklebmasseschicht bis zu 35 Gew.-%, bezogen auf das Gesamtgewicht der äußeren Haftklebmasse-Schicht, Flammschutzmittel enthält.

3. Klebeband gemäß einem der vorstehenden Ansprüche, **dadurch gekennzeichnet, dass** die äußere Haftklebmasseschicht mindestens 15 Gew.-%, bezogen auf das Gesamtgewicht der äußeren Haftklebmasse-Schicht, Flammschutzmittel enthält.

4. Klebeband gemäß einem der vorstehenden Ansprüche, **dadurch gekennzeichnet, dass** das Flächengewichts-Verhältnis der Summe der äußeren Haftklebmasseschichten zu der geschäumten Schicht $\geq$ 3:10 ist.

5. Klebeband gemäß einem der vorstehenden Ansprüche, **dadurch gekennzeichnet, dass** die geschäumte Schicht mindestens ein Polymer ausgewählt aus Polyolefinen und Copolymeren aus Ethylen und einem mit einer polaren Gruppe substituierten Ethylen enthält.

6. Klebeband gemäß einem der vorstehenden Ansprüche, **dadurch gekennzeichnet, dass** die äußere Haftklebmasseschicht mindestens ein Poly(meth)acrylat enthält.

7. Klebeband gemäß mindestens einem der vorstehenden Ansprüche, **dadurch gekennzeichnet, dass** die äußere Haftklebmasseschicht mindestens ein klebrig machendes Harz enthält.

**Europäisches Patentamt**
**European Patent Office**
**Office européen des brevets**

# EUROPÄISCHER RECHERCHENBERICHT

Nummer der Anmeldung

EP 16 17 9112

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2007/149613 A1 (AVERY DENNISON CORP [US]; EPPLE THOMAS C [US]) 27. Dezember 2007 (2007-12-27) | 1,3,4,6,7 | INV. C09J7/02 C09J11/02 C09J11/06 |
| Y | * Seite 11, Zeile 1 - Seite 12, Zeile 10; Ansprüche 1,5,9,15; Beispiel 2 * ----- | 5 | |
| X,D | EP 1 975 217 A2 (CLARIANT INT LTD [CH]) 1. Oktober 2008 (2008-10-01) | 1-4,6 | |
| Y | * Absätze [0094] - [0096], [0187]; Ansprüche 1,15-19; Beispiele 3,7,9,11,13 * ----- | 5 | |
| X | WO 2012/129362 A2 (3M INNOVATIVE PROPERTIES CO [US]; TRAN THU-VAN T [US]; ALOSHYNA EP LES) 27. September 2012 (2012-09-27) | 1-4,6,7 | |
| Y | * Seite 26, Zeilen 7-30; Ansprüche 1-5,19,20; Beispiel 2 * ----- | 5 | |
| Y,D | DE 10 2012 210386 A1 (TESA SE [DE]) 24. Dezember 2013 (2013-12-24) * Absätze [0023] - [0025] * ----- | 5 | |

RECHERCHIERTE SACHGEBIETE (IPC)

C09J

Der vorliegende Recherchenbericht wurde für alle Patentansprüche erstellt

| Recherchenort | Abschlußdatum der Recherche | Prüfer |
|---|---|---|
| München | 18. November 2016 | Sperry, Pascal |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 17 9112

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2016

| Im Recherchenbericht angeführtes Patentdokument | Datum der Veröffentlichung | Mitglied(er) der Patentfamilie | Datum der Veröffentlichung |
|---|---|---|---|
| WO 2007149613 A1 | 27-12-2007 | CN 101479357 A<br>EP 2032667 A1<br>US 2009291291 A1<br>WO 2007149613 A1<br>WO 2008105887 A2 | 08-07-2009<br>11-03-2009<br>26-11-2009<br>27-12-2007<br>04-09-2008 |
| EP 1975217 A2 | 01-10-2008 | DE 102007015083 A1<br>EP 1975217 A2<br>JP 2008291217 A<br>US 2008241529 A1 | 02-10-2008<br>01-10-2008<br>04-12-2008<br>02-10-2008 |
| WO 2012129362 A2 | 27-09-2012 | CN 103443234 A<br>EP 2688969 A2<br>JP 2014515049 A<br>KR 20140012736 A<br>US 2014107282 A1<br>WO 2012129362 A2 | 11-12-2013<br>29-01-2014<br>26-06-2014<br>03-02-2014<br>17-04-2014<br>27-09-2012 |
| DE 102012210386 A1 | 24-12-2013 | CA 2813530 A1<br>CN 103509477 A<br>DE 102012210386 A1<br>EP 2684927 A2<br>JP 2014001383 A<br>KR 20130142948 A<br>TW 201400581 A<br>US 2013340827 A1 | 20-12-2013<br>15-01-2014<br>24-12-2013<br>15-01-2014<br>09-01-2014<br>30-12-2013<br>01-01-2014<br>26-12-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1975217 A2
- DE 102012210386 A1
- WO 2009052335 A1
- US 20070059521 A1
- EP 1752485 A1

**In der Beschreibung aufgeführte Nicht-Patentliteratur**

- **T.G. FOX.** *Bull. Am. Phys. Soc.,* 1956, vol. 1, 123